# DEMANDE DE BREVET EUROPEEN

(11) **EP 0 856 425 A1**
(43) Date de publication de la demande: **05.08.1998**
(21) Numéro de dépôt: 98400198.2
(22) Date de dépôt: 30.01.1998
(51) Int. Cl.: B60J 10/00, E05F 15/00

(54) **Profilé de guidage d'une vitre ou d'un panneau mobile motorisé et son procédé de fabrication**

(30) Priorité: 04.02.1997 FR 9701207
(71) Demandeur: HUTCHINSON, F-75008 Paris (FR)
(72) Inventeur: Tessier, Bernard, 45120 Chalette-Sur-Loing (FR)
(74) Mandataire: Doireau, Marc

(57) **Abrégé**

Profilé de guidage d'une vitre ou d'un panneau mobile motorisé, le profilé étant équipé d'un dispositif anti-pincement capacitif (10) fonctionnant par rapprochement sans contact et qui est constitué par au moins un élément électriquement conducteur (12) noyé dans le profilé de guidage (1) et destiné à être relié, lorsque le profilé de guidage est monté dans l'encadrement de la vitre ou du panneau, à un dispositif électronique (20) de détection d'une variation de capacité provoquée par le déplacement ou la déformation de l'élément conducteur (12) suite à un écrasement du profilé de guidage qui est provoqué par l'interposition d'un corps étranger qui fait obstacle à la remontée de la vitre ou au coulissement du panneau mobile, caractérisé en ce que l'élément conducteur (12) du dispositif anti-pincement (10) est constitué par un ressort métallique hélicoïdal qui est partiellement étiré pour être à la fois compressible et extensible, de manière à ne pas déplacer la fibre neutre du profilé.

## Description

La présente invention concerne un profilé de guidage d'une vitre ou d'un panneau mobile motorisé, qui est équipé d'un dispositif anti-pincement.

Dans le domaine automobile, il est reconnu qu'un passager peut se pincer accidentellement lors de la fermeture motorisée d'une vitre coulissante de porte ou d'un panneau coulissant de toit. Pour pallier ce type d'accident, il est connu de prévoir un dispositif anti-pincement pour arrêter automatiquement ou inverser le sens de marche du moteur qui commande la vitre ou le panneau de toit dès qu'un corps étranger fait obstacle à la remontée de la vitre ou au coulissement du panneau de toit.

Concrètement, l'obstacle créé par le corps étranger provoque un écrasement du profilé de guidage, et il existe différents types de dispositifs anti-pincement pour détecter cet écrasement.

Le plus souvent, les dispositifs anti-pincement comprennent au moins un élément qui est intégré dans le profilé de guidage et relié à un dispositif électronique capable de détecter la variation de la valeur d'un paramètre qui est modifiée suite à l'écrasement du profilé de guidage d'une part, et qui dépend de la nature de l'élément utilisé d'autre part.

L'élément intégré dans le profilé de guidage peut être une fibre optique qui subit un fléchissement lors de l'écrasement du profilé de guidage, ce qui a pour effet d'affecter la transmission d'un flux lumineux transmis par la fibre, et cette perte de transmission est détectée par le dispositif électronique associé à la fibre optique.

Dans d'autres dispositifs anti-pincement du type interrupteur ou à contact, le profilé de guidage est coextrudé avec un toron présentant deux zones de polymères conducteurs, séparées par une cavité et qui viennent au contact l'une de l'autre par suite de la déformation de la cavité lors d'un écrasement du profilé de guidage.

D'autres dispositifs anti-pincement du type capacitif et sans contact, sont constitués par un ou plusieurs éléments électriquement conducteurs déformables, noyés dans le profilé de guidage et reliés à un dispositif électronique de détection d'une variation de capacité.

Dans le cas d'un dispositif anti-pincement capacitif sans contact à un seul conducteur, on mesure une variation de capacité lorsque le fil se rapproche de la carrosserie qui délimite l'encadrement de porte ou du panneau de toit. Or, l'expérience montre qu'il faut faire alors une distinction entre un corps étranger lui-même conducteur (une main nue par exemple) et un corps étranger isolant (main gantée par exemple), pour pouvoir régler un seuil de déclenchement au niveau du dispositif électronique de mesure d'une variation de capacité, ce qui conduit plutôt à utiliser plusieurs fils conducteurs.

Dans le cas d'un dispositif anti-pincement capacitif sans contact à deux fils conducteurs, ces deux fils sont montés de part et d'autre d'une cavité qui se déforme pour obtenir un rapprochement sensible de ces deux fils lors d'un écrasement du profilé de guidage. Cependant, pour faciliter le rapprochement entre les deux fils conducteurs, il s'avère nécessaire de positionner ces deux fils, ainsi que la cavité qui les sépare, dans la partie du profilé de guidage qui fait saillie à l'extérieur de l'encadrement de porte ou de toit dans lequel le profilé de guidage est encastré.

D'une manière générale, notamment dans le cas d'une vitre coulissante de véhicule automobile, l'encadrement de la porte présente des zones galbées et/ou cintrées, si bien que le profilé de guidage est nécessairement déformé pour pouvoir épouser la forme ou prendre le rayon de ces zones. Concrètement, il en résulte que dans ces zones, le profilé de guidage peut être globalement scindé en deux parties qui travaillent respectivement en traction (partie du profilé encastrée dans l'encadrement) et en compression (partie faisant saillie hors de l'encadrement), ces deux parties étant séparées l'une de l'autre par une partie neutre, dénommée fibre neutre, qui n'est pas soumise à ces contraintes de traction et de compression. Il est donc souhaitable de concevoir un profilé de guidage tel que sa fibre neutre puisse se situer le plus possible dans la partie du profilé encastrée dans l'encadrement pour éviter tout déchaussement intempestif du profilé de guidage, c'est-à-dire que le profilé de guidage doit avoir une bonne cintrabilité, pour pouvoir prendre les rayons des zones galbées et/ou cintrées de l'encadrement dans lequel il est encastré.

Or, dans les dispositifs anti-pincement précités du type capacitif, les fils conducteurs sont en laiton avec un diamètre de l'ordre du millimètre, si bien que ces fils ont un effet rigidifiant qui tend d'une part à limiter leur rapprochement l'un vers l'autre, et, d'autre part, à déplacer la fibre neutre du profilé de guidage vers la partie du profilé située à l'extérieur de l'encadrement de porte, ce qui nuit à une bonne cintrabilité du profilé et favorise son déchaussement dans les zones galbées et/ou cintrées de l'encadrement de porte.

Le but de l'invention est de pallier les inconvénients précités par la conception d'un profilé de guidage équipé d'un dispositif anti-pincement qui ne modifie que très peu les propriétés de cintrage de ce même profilé de guidage non équipé de ce dispositif anti-pincement.

A cet effet, l'invention propose un profilé de guidage d'une vitre ou d'un panneau mobile motorisé, le profilé étant équipé d'un dispositif anti-pincement capacitif fonctionnant par rapprochement sans contact, et qui est constitué par au moins un élément électriquement conducteur noyé dans le profilé de guidage et destiné à être relié, lorsque le profilé est monté dans l'encadrement de la vitre ou du panneau, à un dispositif électronique de détection d'une variation de capacité provoquée par le déplacement ou la déformation de l'élément conducteur suite à un écrasement du profilé de guidage qui est provoqué par l'interposition d'un corps étranger qui fait obstacle à la remontée de la vitre ou au coulissement du panneau mobile, profilé de guidage qui est caractérisé en ce que l'élément conducteur du dispositif anti-pincement est constitué par un ressort métallique hélicoïdal qui est partiellement étiré pour être à la fois compressible et extensible, de manière à ne pas déplacer la fibre neutre du profilé.

Selon une autre caractéristique de l'invention, le profilé de guidage est constitué par un matériau souple ne présentant pas de caractéristiques diélectriques particulières, tel que l'EPDM, et le ressort métallique partiellement étiré est noyé par coextrusion dans le matériau élastomère.

Ainsi, le ou les éléments conducteurs qui sont noyés dans le profilé de guidage ne modifient que très peu les propriétés intrinsèques du profilé, en particulier sa cintrabilité, c'est-à-dire qu'ils ne déplacent pas ou très peu la fibre neutre du profilé comme cela a été expliqué précédemment.

Selon un mode de réalisation de l'invention, le dispositif anti-pincement capacitif comprend deux éléments conducteurs séparés l'un de l'autre par une cavité ménagée dans le profilé, sachant que le dispositif électronique est destiné à mesurer une variation de capacité résultant du rapprochement des deux éléments conducteurs par suite de la déformation de la cavité qui est provoquée par un écrasement du profilé.

Selon un avantage de l'invention, le fait que l'élément conducteur soit également extensible facilite notamment le raccordement de cet élément au dispositif électronique de détection car il n'est pas nécessaire de dénuder l'élastomère du profilé de guidage pour dégager une extrémité de l'élément conducteur, il suffit en effet de tirer sur une extrémité de l'élément conducteur pour en faire sortir une longueur de quelques millimètres pour effectuer l'opération de raccordement.

D'autres avantages, caractéristiques et détails de l'invention ressortiront de la description explicative qui va suivre, faite en référence aux dessins annexés, donnés uniquement à titre d'exemple et dans lesquels :
- la figure 1 est une vue schématique d'une porte de véhicule automobile ayant une vitre coulissante,
- la figure 2 est une vue en coupe suivant la ligne II-II de la figure 1 pour illustrer le profilé de guidage de la vitre et le principe du fonctionnement d'un dispositif anti-pincement associé au profilé,
- la figure 3 est une vue en perspective d'un élément électriquement conducteur du dispositif anti-pincement selon un mode de réalisation de l'invention,
- les figures 4 et 5 sont deux vues en perspective d'une extrémité du profilé de guidage pour illustrer le principe du raccordement de l'élément électriquement conducteur de la figure 3 au dispositif électronique de détection schématiquement illustré sur la figure 1, et
- la figure 6 est une vue en perspective schématique et partielle pour illustrer un procédé pour intégrer l'élément conducteur de la figure 3 dans le profilé de guidage illustré sur la figure 2.

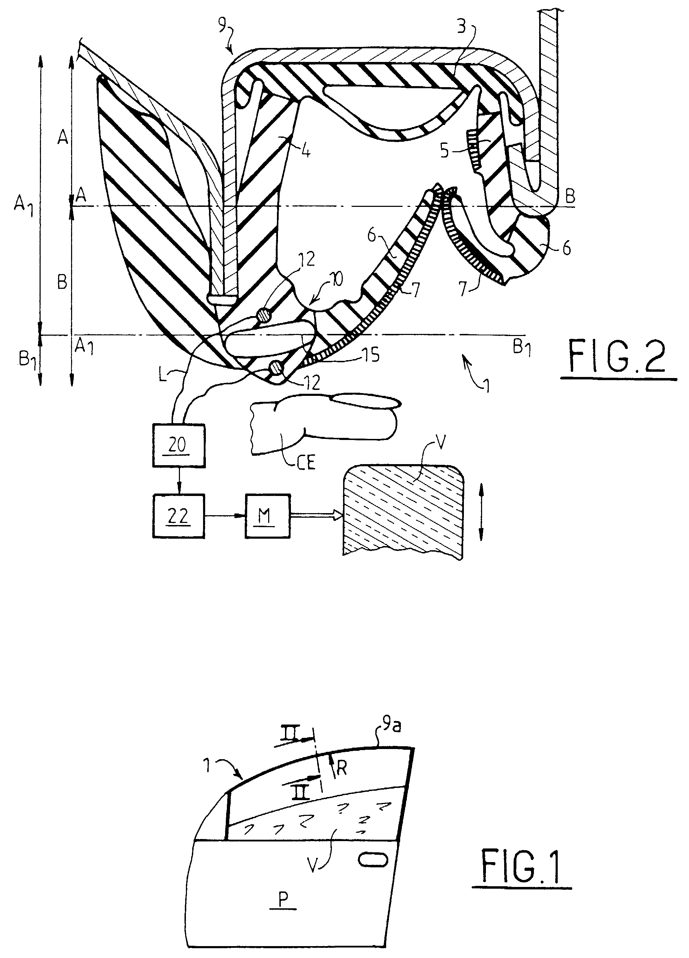

Le profilé de guidage 1 schématiquement illustré sur la figure 1 forme une coulisse pour une vitre V d'une porte P de véhicule automobile.

D'une manière connue et en se référant à la figure 2, le profilé de guidage 1 a une section droite en U avec un talon 3 et deux branches ou ailes respectivement interne 4 (côté habitacle du véhicule) et externe 5 (côté extérieur du véhicule). Les deux ailes 4 et 5 sont raccordées au talon 3 et se terminent chacune par une lèvre d'étanchéité 6 repliée vers l'intérieur du profilé de guidage 1 pour se trouver dans le chemin de déplacement de la vitre V. La surface externe de chaque lèvre 6, qui est destinée à venir au contact de la vitre V, est munie d'un revêtement 7 ayant de bonnes qualités de glissement.

Le profilé de guidage 1 est encastré dans l'encadrement de porte qui est délimité par une feuillure métallique 9 ayant également une section droite en forme de U. Comme cela est illustré sur la figure 1, la feuillure 9 peut présenter au moins une zone cintrée 9a qui nécessite une prise de rayon R pour le profilé de guidage 1.

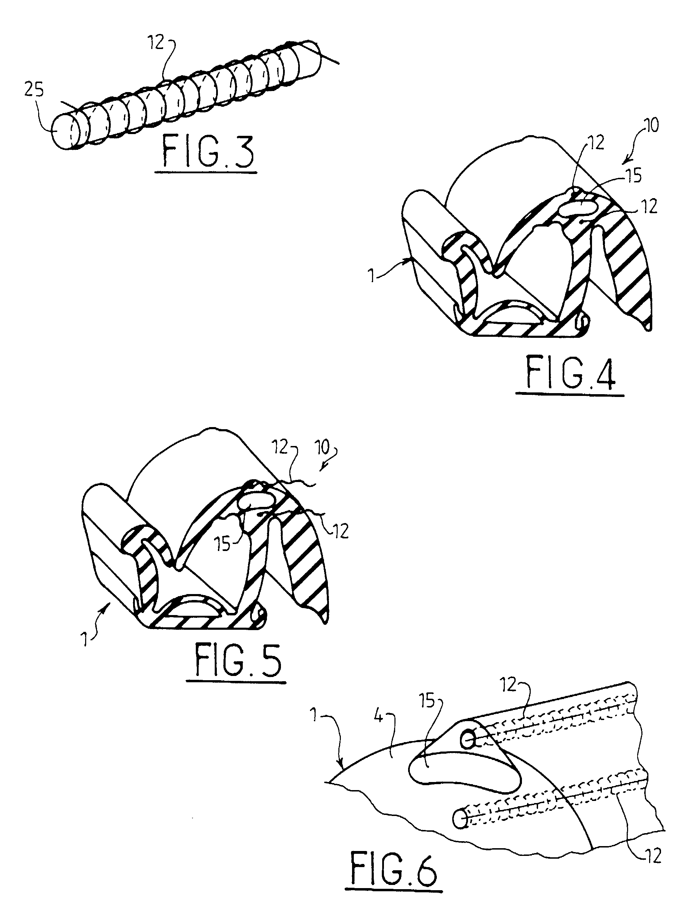

Le profilé de guidage 1 est associé à un dispositif anti-pincement 10 du type capacitif et fonctionnant par rapprochement sans contact. Le dispositif anti-pincement 10 comprend au moins un élément électriquement conducteur 12 noyé dans le profilé de guidage 1, cet élément 12 étant souple et capable de se déformer au moins par compression. De façon préférentielle, cet élément 12 est également étirable ou extensible pour se déformer par traction. Un tel élément conducteur 12 est avantageusement un ressort hélicoïdal préalablement étiré (spires non jointives) et qui peut être fabriqué à partir d'un fil métallique ayant un diamètre de l'ordre de 0,2 mm (figure 3).

Dans l'exemple illustré sur la figure 2, le dispositif anti-pincement 10 comprend deux éléments conducteurs 12 qui sont séparés l'un de l'autre par une cavité 15 ménagée dans le profilé de guidage 1.

Le dispositif anti-pincement 10 est monté dans la branche interne 4 du profilé de guidage et est situé vers l'extrémité libre de celle-ci pour les raisons expliquées précédemment, c'est-à-dire pour faciliter le rapprochement des deux conducteurs 12 lors de l'écrasement du profilé 1 par un corps étranger CE interposé entre la vitre V et le profilé 1.

Les deux éléments conducteurs 12 sont reliés par des fils de liaison L à un dispositif électronique 20 de mesure de la variation de capacité résultant du rapprochement des deux éléments 12. Ce dispositif de détection 20 est relié à un dispositif de commande 22 d'un organe moteur M qui assure le coulissement de la vitre V.

D'une manière générale, une fois qu'un profilé de guidage 1 est encastré dans la feuillure 9 de l'encadrement de porte, la prise de rayon de la zone cintrée 9a de la feuillure 9 (figure 1) fait que le profilé 1 travaille en traction dans une première partie et en compression dans une seconde partie, ces deux parties étant séparées l'une de l'autre par une fibre neutre.

Ces deux parties A (en traction) et B (en compression), ainsi que la fibre neutre schématisée par l'axe A-B, ont été schématiquement représentées sur la figure 2 dans le cas d'un profilé de guidage avec deux éléments conducteurs 12 selon l'invention, alors que les zones A1 (en traction) et B1 (en compression) ainsi que la fibre neutre schématisée par l'axe A1-B1 correspondent au cas d'un profilé de guidage avec deux éléments conducteurs selon l'Art antérieur.

A l'examen de la position des deux fibres neutres A-B et A1-B1, on constate que la fibre neutre A-B est celle qui est située le plus à l'intérieur de la feuillure 9, ce qui implique une bonne prise de rayon des zones cintrées et/ou galbées de la feuillure 9. En effet, lors de la prise de rayon, les éléments conducteurs 12 qui sont situés dans la partie B du profilé de guidage 1 travaillant en compression, se déforment également en compression mais sans provoquer une rigidification du profilé 1 qui aurait tendance à déplacer la position de la fibre neutre A-B vers celle de la fibre A1-B1.

D'une manière générale, le dispositif anti-pincement 10 est intégré dans le profilé de guidage 1. Plus précisément, les deux éléments conducteurs 12 sont préalablement étirés avant d'être noyés par une opération de coextrusion dans un matériau souple ne présentant pas de caractéristiques diélectriques particulières, tel qu'un EPDM (Ethylène Propylène Diène Monomère), qui est suivie d'une opération de vulcanisation. En variante, le profilé de guidage 1 peut être fabriqué à partir de deux élastomères ayant des duretés SHORE différentes. Par exemple, le talon 3 et les lèvres d'étanchéité 6 sont fabriqués à partir d'un EPDM d'une dureté de l'ordre de 70 SHORE A, alors que les ailes sont fabriquées à partir d'un EPDM de dureté 40 SHORE D.

D'une manière générale, le profilé est fabriqué en continu et découpé ensuite pour former des longueurs d'ébauches ou brins qui sont assemblés dans des moules pour former un profilé de guidage de vitre ou de panneau coulissant.

Les découpes effectuées dans le profilé sont faites d'une façon nette par tranchage. En se reportant à la figure 4, lorsqu'une ébauche de profilé de guidage 1 est tranchée, les éléments conducteurs 12 sont également tranchés d'une façon nette.

Lorsque les éléments conducteurs 12 sont constitués par des ressorts qui ont été légèrement étirés avant l'opération d'extrusion pour disjoindre leurs spires, ces ressorts sont à la fois compressibles et extensibles. Ainsi, pour assurer le raccordement au dispositif électronique 20, il suffit de prendre une pince et de tirer sur chaque extrémité des ressorts pour les débobiner partiellement et les extraire du profilé 1 sur une longueur de quelques millimètres et faciliter ainsi l'opération de raccordement (figure 5), par sertissage par exemple.

Par contre, dans le cas d'éléments conducteurs 12 non extensibles, l'opération de raccordement précitée serait plus délicate car il faudrait alors procéder à un dénudage de l'élastomère afin de dégager quelques millimètres du conducteur pour faire ce raccordement.

Cette facilité de raccordement avec des conducteurs à la fois compressibles et extensibles, est également très avantageux pour assurer la continuité électrique entre deux brins du profilé de guidage, lorsque le dispositif anti-pincement 10 parcourt plusieurs brins du profilé.

L'invention envisage également un procédé de fabrication particulier pour intégrer ces conducteurs 12 dans le profilé de guidage.

Selon ce procédé de fabrication, le fil conducteur formant le ressort 12 peut être enroulé ou bobiné sur un jonc 25 constitué en un matériau thermofusible ayant une température de fusion inférieure à la température de vulcanisation du matériau élastomère constituant le profilé de guidage 1.

A titre d'exemple, le matériau élastomère constituant le profilé de guidage 1 est un EPDM ayant une température de vulcanisation de l'ordre de 160° C, et le jonc 25 sur lequel est enroulé le ressort 12 est fabriqué à base de polyéthylène basse densité, dont la température de fusion est de l'ordre de 110° C.

Ainsi, on peut coextruder le profilé de guidage 1 autour du jonc 25 qui, lors de l'opération de vulcanisation, fondra pour se diffuser dans le matériau du profilé de guidage 1. On obtiendra ainsi un conducteur 12 spiralé assimilable à un ressort à spires non jointives noyé dans l'élastomère du profilé de guidage 1, comme cela est schématiquement illustré sur la figure 6.

En variante, les éléments électriquement conducteurs 12 pourraient être constitués par des tresses métalliques qui ont la faculté de pouvoir être comprimées. Cependant, leur résistance à la traction nécessiterait une opération de dénudage de l'élastomère du profilé de guidage pour le raccordement au dispositif électronique de détection.

D'une manière générale, les éléments conducteurs 12 s'étendent sur toute ou partie de la longueur du profilé de guidage 1. En effet, lorsque le profilé de guidage forme une coulisse pour une vitre de véhicule automobile, cette coulisse est formée de plusieurs brins et le dispositif anti-pincement 10 ne comprend pas nécessairement des éléments conducteurs qui parcourent tous les brins mais seulement un ou certains d'entre eux.

## Revendications

1. Profilé de guidage d'une vitre ou d'un panneau mobile motorisé, le profilé étant équipé d'un dispositif anti-pincement capacitif (10) fonctionnant par rapprochement sans contact et qui est constitué par au moins un élément électriquement conducteur (12) noyé dans le profilé de guidage (1) et destiné à être relié, lorsque le profilé de guidage est monté dans l'encadrement de la vitre ou du panneau, à un dispositif électronique (20) de détection d'une variation de capacité provoquée par le déplacement ou la déformation de l'élément conducteur (12) suite à un écrasement du profilé de guidage qui est provoqué par l'interposition d'un corps étranger qui fait obstacle à la remontée de la vitre ou au coulissement du panneau mobile, caractérisé en ce que l'élément conducteur (12) du dispositif anti-pincement (10) est constitué par un ressort métallique hélicoïdal qui est partiellement étiré pour être à la fois compressible et extensible, de manière à ne pas déplacer la fibre neutre du profilé.

2. Profilé de guidage selon la revendication 1, caractérisé en ce que le profilé de guidage est constitué par un matériau élastomère souple, tel que l'EPDM, et en ce que l'élément conducteur (12) partiellement étiré est noyé par coextrusion dans le matériau élastomère.

3. Profilé de guidage selon la revendication 1 ou 2, caractérisé en ce que le dispositif anti-pincement (10) comprend deux éléments conducteurs (12) séparés l'un de l'autre par une cavité (15) ménagée dans le profilé, et en ce que le dispositif électronique (20) est destiné à mesurer une variation de capacité résultant du rapprochement des deux éléments conducteurs (12) par suite de la déformation de la cavité (15) qui est provoquée par un écrasement du profilé (1).

4. Profilé de guidage selon l'une quelconque des revendications précédentes, caractérisé en ce que les éléments conducteurs (12) s'étendent sur toute ou partie de la longueur du profilé.

5. Procédé de fabrication du profilé de guidage tel que défini par l'une quelconque des revendications précédentes, caractérisé en ce qu'il consiste :
- à réaliser le dispositif anti-pincement (10) à partir d'au moins un élément conducteur (12) sous la forme d'un ressort partiellement étiré obtenu en enroulant un fil métallique sur un jonc (25) constitué en un matériau thermofusible ayant une température de fusion inférieure à la température de vulcanisation du matériau élastomère constituant le profilé de guidage, et
- à coextruder le profilé de guidage (1) autour dudit jonc (25) qui, lors de l'opération de vulcanisation, fondra pour se diffuser dans le matériau du profilé de guidage.

6. Procédé selon la revendication 5, caractérisé en ce qu'il consiste à utiliser un matériau tel qu'un EPDM ayant une température de vulcanisation de l'ordre de 160° C pour constituer le profilé de guidage, et à utiliser un matériau à base de polyéthylène basse densité ayant une température de fusion de l'ordre de 110° C pour constituer le jonc (25) sur lequel est enroulé l'élément conducteur (12).
